# EUROPEAN PATENT APPLICATION

(11) **EP 2 704 528 A1**
(43) Date of publication of application: **05.03.2014**
(21) Application number: 12192954.1
(22) Date of filing: 16.11.2012
(51) Int. Cl.: H05B 33/08

(54) **Luminaire and lighting method**

(30) Priority: 31.08.2012 JP 2012192363
(71) Applicant: Toshiba Lighting & Technology Corporation, Yokosuka-shi Kanagawa 237-8510 (JP)
(72) Inventor: Nakajima, Hiromichi, Kanagawa, 237-8510 (JP)
(74) Representative: Willquist, Sofia Ellinor

(57) **Abstract**

According to one embodiment, a luminaire includes a light-emitting module (2, 2a). The light-emitting module (2, 2a) includes a light-emitting element (4, 4a) and a capacitive element (5, 5a). The capacitive element (5, 5a) is connected to the light-emitting element (4, 4a) in parallel. The capacitive element (5, 5a) has a withstand voltage higher than a breakdown voltage of the light-emitting element (4, 4a).

## Description

### FIELD

Embodiments described herein relate generally to a luminaire.

### BACKGROUND

For example, a luminaire is known in which a capacitive element such as a capacitor is connected to a light-emitting element such as a light-emitting diode (LED) to stably light the light-emitting element without flickering. In such a luminaire, it is likely that, for example, a high voltage is generated during power-on or the like and the capacitive element is broken.

### BRIEF DESCRIPTION OF THE DRAWINGS

FIG. 1 is a block diagram illustrating a luminaire according to a first embodiment;
FIG. 2 is a schematic diagram illustrating the luminaire;
FIG. 3 is a waveform chart illustrating an output voltage VOUT output by a lighting circuit if a light-emitting module is electrically reversely connected; and
FIG. 4 is a circuit diagram illustrating a light-emitting module according to a second embodiment.

### DETAILED DESCRIPTION

In general, according to one embodiment, a luminaire includes a light-emitting module. The light-emitting module includes a light-emitting element and a capacitive element. The capacitive element is connected to the light-emitting element in parallel. The capacitive element has a withstand voltage higher than a breakdown voltage of the light-emitting element.

Embodiments are explained in detail below with reference to the drawings. In this specification and the figures, components same as components already explained with reference to the drawings are denoted by the same reference numerals and signs and explanation of the components is omitted as appropriate.

### First Embodiment

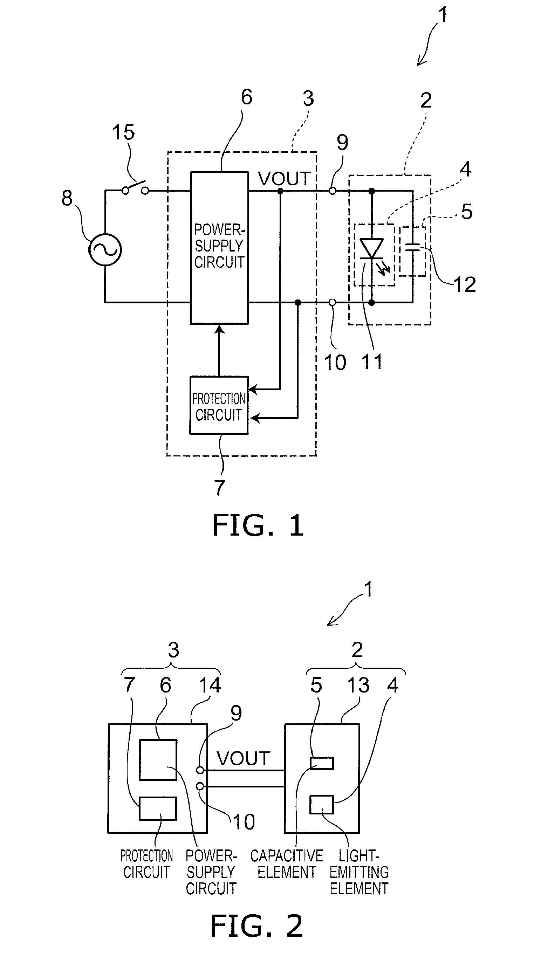

FIG. 1 is a block diagram illustrating a luminaire according to a first embodiment.
FIG. 2 is a schematic diagram illustrating the luminaire.

As shown in FIGS. 1 and 2, a luminaire 1 includes a light-emitting module 2 and a lighting circuit 3 that drives and turns on the light-emitting module 2. In FIG. 2, a plan view of the luminaire 1 is schematically shown.

The light-emitting module 2 includes a light-emitting element 4 and a capacitive element 5 connected to the light-emitting element 4 in parallel. The light-emitting module 2 is provided, for example, on a first mounting board 13 and connected to the lighting circuit 3 via a high-potential terminal 9 and a low-potential terminal 10.

The light-emitting element 4 includes a first light-emitting diode 11. The light-emitting element 4 is supplied with electric power from the lighting circuit 3 and turned on.

The capacitive element 5 includes a first capacitor 12. The capacitive element 5 is provided in the vicinity of the light-emitting element 4. The capacitive element 5 suppresses variations in a noise-removed voltage from the lighting circuit 3 or the like and prevents flickering. A withstand voltage of the capacitive element 5 is set higher than a reverse breakdown voltage of the light-emitting element 4.

The withstand voltage of the capacitive element 5 is a maximum voltage that can be applied to the capacitive element 5 without breaking the capacitive element 5. The withstand voltage refers to a rated voltage in a standard such as JIS or a maximum voltage that can be actually applied. Similarly, the reverse breakdown voltage of the light-emitting element 4 is a minimum voltage in a reverse direction at which the light-emitting element 4 breaks down. The reverse breakdown voltage refers to a rated voltage in the standard or a voltage at which the light-emitting element 4 actually breaks down.

In the light-emitting module 2, the light-emitting element 4 includes one first light-emitting diode 11. Therefore, the reverse breakdown voltage of the light-emitting element 4 is equal to a reverse breakdown voltage of the first light-emitting diode 11. In the light-emitting module 2, the capacitive element 5 includes one first capacitor 12. Therefore, the withstand voltage of the capacitive element 5 is equal to a withstand voltage of the first capacitor 12.

In the configuration of the light-emitting module 2 illustrated herein, the light-emitting element 4 includes the one first light-emitting diode 11 and the capacitive element 5 includes the one first capacitor 12. The first light-emitting diode 11 and the first capacitor 12 can be provided in arbitrary numbers.

The lighting circuit 3 includes a power-supply circuit 6 and a protection circuit 7. The lighting circuit 3 is provided on a second mounting board 14 different from the first mounting board 13.

The power-supply circuit 6 converts an alternating-current voltage input from an alternating-current power supply 8 via a switch 15 into a direct-current voltage and outputs the direct-current voltage as an output voltage VOUT of the lighting circuit 3. The power-supply circuit 6 includes, for example, a rectifying circuit that rectifies an alternating-current voltage and outputs a direct-current voltage and a DC-DC converter that converts the direct-current voltage output from the rectifying circuit. In the configuration of the lighting circuit 3 illustrated herein, a power-supply single-throw switch including an SPST (Single-Pole Single-Throw) switch is used as the switch 15. However, the lighting circuit 3 may have other configurations.

The protection circuit 7 detects the output voltage VOUT and stops the operation of the power-supply circuit 6 if the output voltage VOUT is equal to or larger than a specified value. The specified value is a voltage value lower than the reverse breakdown voltage of the light-emitting element 4, which is the voltage at which the light-emitting element 4 breaks down.

The protection circuit 7 provides a protection function in the lighting circuit 3 for stopping the circuit operation of the lighting circuit 3 if the output voltage (a voltage applied to the light-emitting element) VOUT is equal to or larger than the specified value.

In the configuration of the lighting circuit 3 illustrated herein, the protection function is implemented by stopping the power-supply circuit 6 using the protection circuit 7. However, the protection function for the lighting circuit 3 only has to be capable of stopping the circuit operation of the lighting circuit 3 if the output voltage VOUT is equal to or larger than the specified value. The protection function may be implemented by other configurations.

The operation of the luminaire 1 is explained.

In a normal operation, when the switch 15 is turned on, the lighting circuit 3 operates and outputs the output voltage VOUT. The output voltage VOUT is applied to the light-emitting module 2 in a forward direction. The light-emitting module 2 is turned on.

However, if the light-emitting module 2 is electrically reversely connected because of, for example, wrong wire connection during installation between the light-emitting module 2 and the lighting circuit 3, the output voltage VOUT is applied to the light-emitting module 2 in the reverse direction and an electric current does not flow to the light-emitting module 2. Therefore, the light-emitting module 2 is not turned on. At this point, for example, if a DC-DC converter is used in the lighting circuit 3, the output voltage VOUT rises toward an open-circuit voltage. If the open-circuit voltage is higher than the withstand voltage of the capacitive element 5, it is likely that the light-emitting module 2 including the capacitive element 5 is broken.

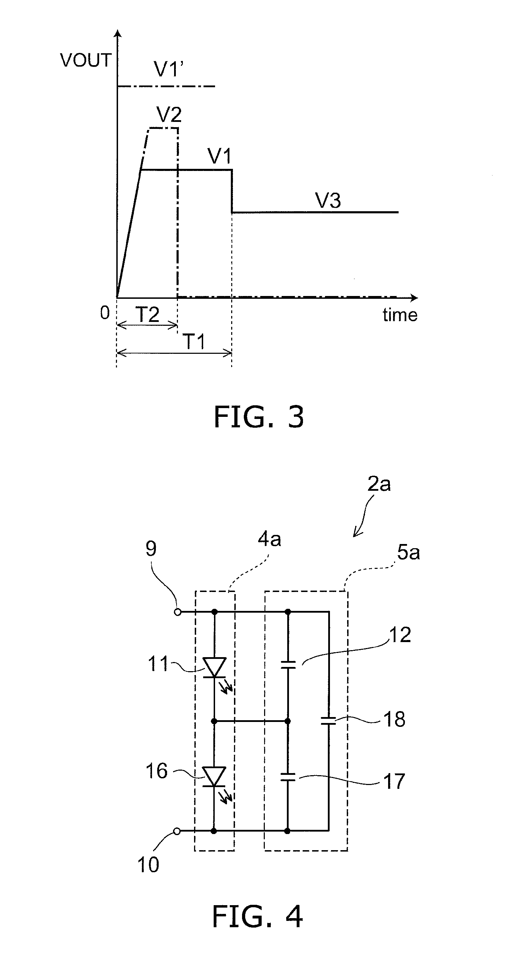

FIG. 3 is a waveform chart illustrating the output voltage VOUT of the lighting circuit output if the light-emitting module is electrically reversely connected.

In FIG. 3, a waveform of the output voltage VOUT after power-on applied to the light-emitting module 2 in the reverse direction is indicated by a solid line. A waveform of the output voltage VOUT output if a breakdown voltage V1' of the light-emitting element 4 is larger than a withstand voltage V2 of the capacitive element 5 is indicated by an alternate long and short dash line as a comparative example.

The protection function in the lighting circuit 3, i.e., a protection function for stopping the circuit operation of the lighting circuit 3 if the output voltage VOUT is equal to or larger than the specified value is stopped for a predetermined period T1 from the power-on. For example, the protection function is masked in the predetermined period T1 immediately after the power-on to prevent the protection function from malfunctioning because of overshoot during the power-on.

Therefore, when the switch 15 is turned on to turn on power at time 0, an electric current does not flow from the lighting circuit 3 to the light-emitting module 2. Therefore, the output voltage VOUT rises toward the open-circuit voltage of the lighting circuit 3.

If the output voltage VOUT rises to a breakdown voltage V1 of the light-emitting element 4, the light-emitting element 4 breaks down. The output voltage VOUT is clamped to the breakdown voltage V1.

After the predetermined period T1 from the power-on, the protection function of the lighting circuit 3 operates and the circuit operation of the lighting circuit 3 stops. As a result, the output voltage VOUT drops to a voltage V3 lower than the breakdown voltage V1 of the light-emitting element 4. A value of the output voltage VOUT=V3 when the protection function operates only has to be smaller than the breakdown voltage V1 of the light-emitting element 4 and only has to satisfy relations 0 ≤ V3 < V1.

On the other hand, in the case of the comparative example in which the withstand voltage V2 of the capacitive element 5 is lower than the breakdown voltage V1' of the light-emitting element 4, the capacitive element 5 is broken if the output voltage VOUT rises to the withstand voltage V2 of the capacitive element 5. The output voltage VOUT drops to zero from the vicinity of the voltage V2. A period T2 until the capacitive element 5 is broken depends on a characteristic of the first capacitor 12 included in the capacitive element 5.

However, if the capacitive element 5 is broken once, the capacitive element 5 may not be able to be reused. Therefore, the capacitive element 5 or the light-emitting module 2 needs to be replaced.

On the other hand, in this embodiment, if the output voltage VOUT rises to the breakdown voltage V1 of the light-emitting element 4 during the power-on, for example, if the light-emitting module 2 is reversely connected, the light-emitting element 4 breaks down. As a result the output voltage VOUT is clamped to the breakdown voltage V1 of the light-emitting element 4. Since the withstand voltage V2 of the capacitive element 5 is higher than the breakdown voltage V1 of the light-emitting element 4, the capacitive element 5 is not broken.

After the predetermined period T1 from the power-on, the protection function of the lighting circuit 3 operates to reduce the output voltage VOUT to the voltage V3 (0 ≤ V3 < V1) lower than the breakdown voltage V1 of the light-emitting element 4. As a result, a period in which the light-emitting element 4 breaks down is limited to be equal to or shorter than the predetermined period T1, the light-emitting element 4 is not broken.

The operation explained above is performed when the lighting circuit 3 has the protection function for stopping the circuit operation of the lighting circuit 3 if the output voltage VOUT is equal to or larger than the specified value. However, a configuration in which the lighting circuit 3 does not have the protection function is also possible.

For example, even if the output voltage VOUT is applied to the light-emitting module 2 in the reverse direction because of wrong wire connection or the like and the output voltage VOUT rises to the breakdown voltage V1 of the light-emitting element 4 after the power-on, if the power supply is shut down in a relatively short period, the light-emitting element 4 is not broken. This is because, if the output voltage VOUT is applied to the light-emitting module 2 in the reverse direction, since the light-emitting module 2 is not turned on, a user can recognize that a deficiency such as wrong wire connection occurs.

### Second Embodiment

FIG. 4 is a circuit diagram illustrating a light-emitting module according to a second embodiment.

As shown in FIG. 4, a light-emitting module 2a is different from the light-emitting module 2 in the configurations of the light-emitting element 4 and the capacitive element 5. The light-emitting module 2a includes a light-emitting element 4a and a capacitive element 5a connected to the light-emitting element 4a in parallel. The light-emitting module 2a is provided, for example, on the first mounting board 13 not shown in the figure. The light-emitting module 2a is connected to the lighting circuit 3 via the high-potential terminal 9 and the low-potential terminal 10.

In the light-emitting element 4a, a second light-emitting diode 16 is added to the light-emitting element 4 in the light-emitting module 2. In the capacitive element 5a, a second capacitor 17 and a third capacitor 18 are added to the capacitive element 5 in the light-emitting module 2.

The light-emitting element 4a includes the first light-emitting diode 11 and the second light-emitting diode 16 connected to the first light-emitting diode 11 in series. The light-emitting element 4a is supplied with electric power from the lighting circuit 3 and turned on.

The capacitive element 5a includes the first capacitor 12, the second capacitor 17, and the third capacitor 18. The first capacitor 12 is connected to the first light-emitting diode 11 in parallel. The withstand voltage of the first capacitor 12 is set higher than the breakdown voltage V1 of the first light-emitting diode 11. The second capacitor 17 is connected to the second light-emitting diode 16 in parallel. A withstand voltage V2a of the second capacitor 17 is set higher than a breakdown voltage V1a of the second light-emitting diode 16.

The breakdown voltage V1 of the first light-emitting diode 11 and the breakdown voltage V1a of the second light-emitting diode 16 are substantially equal. The withstand voltage V2 of the first capacitor 12 and the withstand voltage V2a of the second capacitor 17 are substantially equal.

The third capacitor 18 is connected to the first light-emitting diode 11 and the second light-emitting diode 16 in parallel. The withstand voltage V3 of the third capacitor 18 is set higher than a combined voltage of the breakdown voltage V1 of the first light-emitting diode 11 and the breakdown voltage V1a of the second light-emitting diode 16.

A breakdown voltage of the light-emitting element 4a is a voltage at which the light-emitting element 4a breaks down. A breakdown voltage of the light-emitting element 4a including the first light-emitting diode 11 and the second light-emitting diode 16 is a combined voltage of the breakdown voltage V1 of the first light-emitting diode 11 and the breakdown voltage V1a of the second light-emitting diode 16.

A withstand voltage of the capacitive element 5a is a maximum voltage that can be applied to the capacitive element 5a without breaking the capacitive element 5a. A withstand voltage of the capacitive element 5a including the first capacitor 12, the second capacitor 17, and the third capacitor 18 is a value not higher of a value of a combined voltage of the withstand voltage V2 of the first capacitor 12 and the withstand voltage V2a of the second capacitor 17 and a value of the withstand voltage V3 of the third capacitor 18.

In the configuration of the light-emitting module 2a illustrated above, the light-emitting element 4a includes the first and second light-emitting diodes 11 and 16. However, the light-emitting element 4a may include an arbitrary number of light-emitting diodes. In the configuration, the capacitive element 5a includes the first to third capacitors 12, 17, and 18. However, the capacitive element 5a may include an arbitrary number of capacitors.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

A luminaire in which the light-emitting module 2a according to the second embodiment is connected to the lighting circuit 3 is included in the scope and the gist of the invention and included in the invention described in claims and a scope of equivalents of the invention.

## Claims

1. A luminaire comprising a light-emitting module (2, 2a),
the light-emitting module (2, 2a) including:
a light-emitting element (4, 4a); and
a capacitive element (5, 5a) connected to the light-emitting element (4, 4a) in parallel and having a withstand voltage higher than a breakdown voltage of the light-emitting element (4, 4a).

2. The luminaire according to claim 1, further comprising a lighting circuit (3) configured to drive the light-emitting module (2, 2a),
the lighting circuit (3) having a specified value lower than the breakdown voltage and having a protection function stopping a circuit operation if a voltage applied to the light-emitting element (4, 4a) is equal to or larger than the specified value.

3. The luminaire according to claim 2, wherein the protection function stops for a predetermined period during power-on.

4. The luminaire according to any one of claims 1 to 3, wherein
the light-emitting module (2, 2a) is provided on a first mounting board (13), and
the lighting circuit is provided on a second mounting board (14) different from the first mounting board.

5. The luminaire according to any one of claims 1 to 4, wherein
the light-emitting element (4a) includes:
a first light-emitting diode (11); and
a second light-emitting diode (16) connected to the first light-emitting diode (11) in series, and
the capacitive element (5a) includes:
a first capacitor (12) connected to the first light-emitting diode (11) in parallel and having a withstand voltage higher than a breakdown voltage of the first light-emitting diode (11);
a second capacitor (17) connected to the second light-emitting diode (16) in parallel and having a withstand voltage higher than a breakdown voltage of the second light-emitting diode (16); and
a third capacitor (18) connected to the first light-emitting diode (11) and the second light-emitting diode (16) in parallel and having a withstand voltage higher than a combined voltage of the breakdown voltage of the first light-emitting diode (11) and the breakdown voltage of the second light-emitting diode (16).
